# EUROPEAN PATENT APPLICATION

(11) **EP 4 279 360 A1**
(43) Date of publication of application: **22.11.2023**
(21) Application number: 22173882.6
(22) Date of filing: 17.05.2022
(51) Int. Cl.: B62D 6/00, B62D 15/02, B62D 1/16

(54) **STEERING FEEDBACK IMPROVEMENT WITH PLANT ESTIMATION**

(71) Applicant: TOYOTA JIDOSHA KABUSHIKI KAISHA, Toyota-shi, Aichi-ken, 471-8571 (JP)
(72) Inventor: HUANG, Yu-Chih, 1140 BRUSSELS (BE); TORM, Roger, 1140 BRUSSELS (BE); AKUTAIN, Xabier Carrera, 1140 BRUSSELS (BE)
(74) Representative: Cabinet Beau de Loménie

(57) **Abstract**

A method for compensating for dynamics introduced by mechanical components in a steering system (101), the method comprising determining a plant dynamic attribute for the steering system (101), and applying, based on the plant dynamic attribute, to a control signal by a handwheel loading system at least one out of the following group: a steering wheel state estimator configured to improve a steering wheel state (104) signal; or a torque command feedforward compensator that is configured to correct a mismatch between a measured torque and an actual torque.

## Description

### TECHNICAL FIELD

The present disclosure relates to steering control, and more new steering control method and system for improved robustness of closed-loop system stability. The method may find applications in all kinds of industries, including the automotive industry.

### BACKGROUND

A vehicle may include an interface so that a vehicle user may control a direction of the vehicle travel. In a conventional vehicle, the user may operate a steering wheel that is connected to the wheels of the vehicle such that changing the steering wheel angle changes the wheels' toe angle. In modern cars, the steering wheel and vehicle wheels may not be physically connected, but may rather be connected to a computer coordinates control system. This may operate similarly to a vehicle simulator, in which the user is controlling a virtual vehicle via a physical means.

One problem common to both the physical vehicle and vehicle simulator is that a user expects feedback at the steering wheel that corresponds with a travel condition of the car, such as the speed, terrain, physical components of the vehicle, etc. As such, a motor may be arranged within the vehicle so as to provide responsive feedback to the steering wheel. As vehicle systems become more complex, including the electric motors, shafts, bearings, gears, etc., high order dynamics may be introduced by mechanical components and closed loop control that affect the accuracy of the response feedback, leading to a lower level of "road feel" comfort by the user. Thus, there exists the problem of how to improve the feedback quality of the closed-system control loop, especially of existing systems, without adding more components or overly increasing the complexity of the system.

### SUMMARY

Aspects of the present disclosure are directed toward systems and methods for providing a steering control system with improved closed-loop system stability. For any driving simulator that aims to have higher fidelity in terms of road feel, the control accuracy and stability of the steering wheel is essential. To achieve high fidelity handwheel feedback, great focus is put on using low latency motors, but usually little attention is paid to account for the dynamics between the steering wheel and the actuator. These dynamics have limited impact for low latency direct-drive systems but are of increasing relevance as mechanical steering column components are added, especially for indirect-drive motors. When using high fidelity vehicle and steering models, ignoring the physical system's transfer path dynamics leads to sub-optimal control and in some cases to unstable behavior.

An aspect of the present disclosure is directed A method for compensating for dynamic mismatches or feedback distortions introduced by mechanical components in a steering system, the method comprising: determining a plant dynamic attribute for the steering system, and applying, based on the plant dynamic attribute, to a control signal by a handwheel loading system at least one out of the following group: a steering wheel state estimator configured to improve a steering wheel state signal; or a torque command feedforward compensator that is configured to correct a mismatch between a measured torque and an actual torque.

In an example, the steering system may comprises a steering wheel, a steering column, and a handwheel loading system that may be configured to account for a mismatch between the virtual and the actual interface point at the virtual model and the actuator hardware when providing steering cues to a user via the steering wheel through the steering column.

In an example, the handwheel loading system may comprise an actuator configured to provide a torque response to the steering wheel, and a motor controller configured to control the actuator.

In an example, determining a plant dynamic attribute comprises identifying mechanical attributes of components or assemblies and using the mechanical attributes to make a mathematical model of the physical system, wherein the mechanical attributes comprises at least one of: torsional stiffness, friction characteristics, or moments of inertia.

In an example, the steering wheel state estimator may be configured to determine the steering wheel state using an angle sensor in the steering wheel.

In an example, the steering wheel state estimator may be configured to determine the steering wheel state using a lower column angle and torque readings to estimate the steering wheel states.

In an example, the steering wheel state estimator may be configured to use the measured and corrected signals from the motor hardware and determine the required steering wheel states upstream given a known mechanical plant that can be linearized.

In an example, the torque command feedforward compensator may be comprised of a column dynamics compensator configured to use the linear plant representation to compensate for the steering column dynamic and an electromechanical motor dynamics compensator that is configured to increase the damping of the oscillations introduced by the motor dynamics to the command torque.

In an example, the steering system of the method may be part of a closed-loop driving simulator.

An aspect of the disclosure is directed toward a steering system that includes high order dynamics introduced by mechanical components comprising a steering wheel, a steering column, and a handwheel loading system that is configured to account for a mismatch between the virtual and the actual interface point at a virtual model and an actuator when providing steering cues to a user via the steering wheel through the steering column.

In an example, the steering column may comprise a plurality of column elements, wherein each column element may be connected to an adjacent column element via a universal joint.

In an example, the handwheel loading system may comprise an actuator configured to provide a torque response to the steering wheel, and a motor controller configured to control the actuator.

In an example, the motor controller may include at least one out of the following group: a steering wheel state estimator module configured to improve a steering wheel state signal; or a torque command feedforward compensator module that is configured to correct a mismatch between a measured torque and an actual torque.

In an example, the steering system may be part of a closed-loop driving simulator.

In an example, the steering system may be part of a vehicle.

An aspect of the disclosure is directed toward a non-transitory computer-readable medium storing a program which, when executed by a microprocessor or computer system, causes the microprocessor or computer system to perform the previously stated method.

### BRIEF DESCRIPTION OF THE DRAWINGS

The invention and advantages thereof will be better understood upon reading the detailed description which follows, of embodiments given as non-limiting examples. This description refers to the appended drawings, wherein:
- Fig. 1 is an exemplary illustration of a steering system.
- Fig. 2 is an exemplary illustration of a block diagram of a motor controller for a steering system.
- Fig. 3 is an exemplary illustration of a constant velocity test.
- Fig. 4 is an exemplary illustration of a static load test.
- Fig. 5 is an exemplary illustration of dynamics introduced into a steering system.
- Fig. 6 is an exemplary illustration of a steering wheel angle estimation.
- Fig. 7 is an exemplary illustration of a schematic example of an implementation.
- Fig. 8 is an exemplary illustration of
- Fig. 9 is an exemplary illustration of the frequency responses of different measured and estimated angles to motor torque command.
- Fig. 10 is an exemplary illustration a comparison between a steering torque profile before and after implementing the developed control strategy.

### DETAILED DESCRIPTION OF EMBODIMENTS

As used in this disclosure and the appended claims, the singular forms "a", "an", and "the" include plural referents unless the content clearly dictates otherwise. As used in this disclosure and the appended claims, the term "or" is generally employed in its sense including "and/or" unless the content clearly dictates otherwise.

The following detailed description should be read with reference to the drawings. The detailed description and the drawings, which are not necessarily to scale, depict illustrative aspects and are not intended to limit the scope of the disclosure. The illustrative aspects depicted are intended only as exemplary.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (for example, "between" versus "directly between," "adjacent" versus "directly adjacent," etc.).

Although the terms "first," "second," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present disclosure.

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present technology.

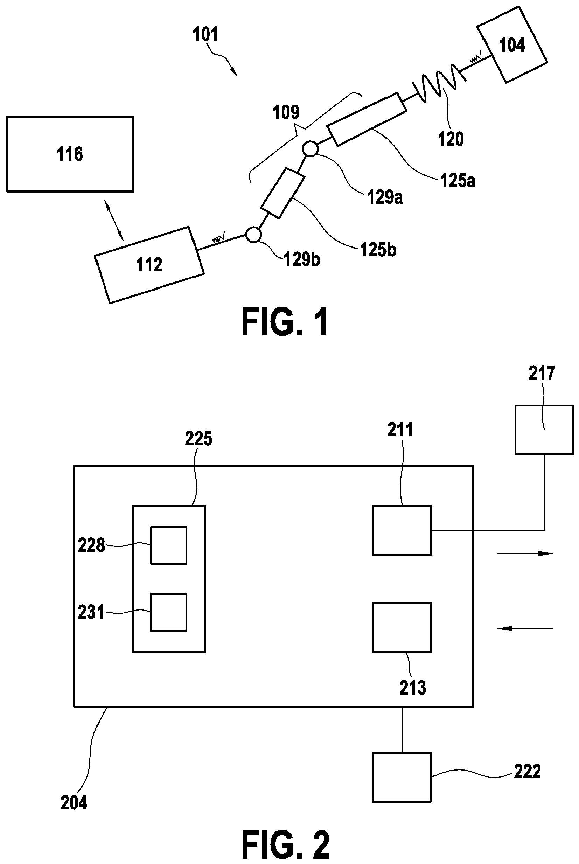

FIG. 1 displays an exemplary steering system 101. The steering system 101 may be a system configured to enable a user to control the travel direction of a vehicle. The steering system 101 may have a "fly-by-wire" configuration, such that the manual movements of the steering controls may be converted to electronic signals. Thus, in an example the vehicle may be a "simulated" vehicle, such that the user may be controlling through a physical steering controller the travel of a virtual or virtualized vehicle in a virtual or virtualized environment, such as what may be known as a "driver-in-the-loop simulator". It is also conceived that the vehicle may be a conventional vehicle that is controlled via such a virtual or virtualized manner. Thus, the steering system is configured to allow a user to transmit through the steering controls a steering signal to the virtual or virtualized vehicle. The steering system is also configured to provide feedback to the steering controller that corresponds with a driving condition, with the aim of providing a realistic driving experience to the user.

The steering system 101 may include a steering wheel 104, a steering column 109, an actuator 112, and a motor controller 116. The steering wheel 104 (steering controls or controller) may be a rotatable steering wheel, such as that can be commonly used for piloting a vehicle. Other structures of providing the user with steering control are considered, such as paddles or a joystick, so long as the user is able to physically input a direction control that corresponds with an intended vehicle travel direction. The steering wheel 104 may be connected to the steering column 109 in a manner that allows the steering wheel 104 to have one or more degrees of freedom. For instance, when the steering wheel 104 is a steering wheel, the steering wheel is attached to the steering column 109 in a manner that allows the steering wheel to be rotatable. For example, the steering wheel 104 may be attached to the steering column 109 by way of a torsion bar 120, such as a high compliance torsion bar.

The steering column 109 may include several steering elements 125A, 125B. A steering element 125a, 125b may be connected to an adjacent column element 125a, 125b, such as via a universal joint 129a, 129b. The joints 129a, 129b may allow for an angle of the column elements 125a, 125b to be adjusted relative to each other. For instance, the angle formed between two adjacent column elements 125a, 125b may be increased or decreased. In this way, the structure of the steering column 109 may be configured to be adjustable, such as to allow the steering wheel 104 to be positioned by the user. For example, when the user is seated in the driver's seat such that the steering wheel 104 is located in front of the user, the user may be able to adjust the steering wheel 104 to be closer to the user, further from the user, high, lower, etc., because of the flexibility allowed by the linkage structure of the steering column 109. As shown, the steering column 109 in an example includes a first column element 125a and a second column element 125b. The first column element 125a is connected to the second column 125b element by way of a first universal joint 129a. Other numbers and configurations of column elements 125a, 125b and/or universal joints 129a, 129b are considered. That is to say, it is conceived that the steering column 109 may include one column element or three or more column elements. When there are more column elements, each column element may be connected to an adjacent column element in a similar manner to that previously described, and so the column element may have a corresponding number of universal joints. In the example shown, the first column element 125a may be an "upper column" and the second column element 125b may be a "lower column" such that the upper column 125a is connected more directly to the steering wheel 104 than the lower column 125b, and the lower column 125b is connected more directly to the actuator 112 than the upper column 125a.

The actuator 112 and motor controller 116 may comprise a handwheel loading system (HWLS), wherein the HWLS is configured to accounting for a mismatch between the virtual and the actual interface point at the virtual model and the actuator hardware when providing steering cues to the user via the steering wheel 104 through the steering column 109. The steering column 109 may be connected to the actuator 112 on an end of the steering column 109 that is opposed to an end of the steering column 109 that is connected to the steering wheel 104. For example, a column element may be clamped to the shaft of the actuator 112. In the example shown, here is a second universal joint 129b that is located between the second column element 125b and the actuator 112.

The actuator 112 may be any of known devices configured to convert electrical power into mechanical power, such as an electric motor. The actuator 112 may be configured to provide a torque response to the steering wheel104. The torque response may be via the steering column 109, such that the actuator may be configured to "twist" the steering column 109 in a desired manner.

The actuator 112 may be controlled by the motor controller 116. The motor controller 116 may include a processor, a memory, a storage device, and/or input/output (I/O) devices. Some or all of the components may be interconnected via a system bus. The processor may be single- or multi-threaded and may have one or more cores. The processor may execute instructions, such as those stored in the memory and/or in the storage device. Information may be received and output using one or more of the I/O devices.

The memory may store information, and may be a computer-readable medium, such as volatile or non-volatile memory. The storage device(s) may provide storage for the computer system and may be a computer-readable medium. In various embodiments, the storage device(s) may be one or more of a flash memory device, a hard disk device, an optical disk device, a tape device, or any other type of storage device.

The I/O devices may provide input/output operations for the computer system. The I/O devices may include a keyboard, a pointing device, and/or a microphone. The I/O devices may further include a display unit for displaying graphical user interfaces, a speaker, and/or a printer. External data may be stored in one or more accessible external databases. In an aspect of the disclosure, such as when the motor controller is a low level real time machine that may have limited or no human interface, I/O devices may include sensors, like motor encoders, or the driver for the servo motor.

Some features of the disclosure described herein may be implemented in digital electronic circuitry, and/or in computer hardware, firmware, software, and/or in combinations thereof. Features of the present embodiments may be implemented in a computer program product tangibly embodied in an information carrier, such as a machine-readable storage device, and/or in a propagated signal, for execution by a programmable processor. Embodiments of the present method steps may be performed by a programmable processor executing a program of instructions to perform functions of the described implementations by operating on input data and generating output.

Some features of the disclosure described herein may be implemented in one or more computer programs that are executable on a programmable system including at least one programmable processor coupled to receive data and/or instructions from, and to transmit data and/or instructions to, a data storage system, at least one input device, and at least one output device. A computer program may include a set of instructions that may be used, directly or indirectly, in a computer to perform a certain activity or bring about a certain result. A computer program may be written in any form of programming language, including compiled or interpreted languages, and it may be deployed in any form, including as a stand-alone program or as a module, component, subroutine, or other unit suitable for use in a computing environment.

Suitable processors for the execution of a program of instructions may include, for example, both general and special purpose processors, and/or the sole processor or one of multiple processors of any kind of computer. Generally, a processor may receive instructions and/or data from a read only memory (ROM), or a random access memory (RAM), or both. Such a computer may include a processor for executing instructions and one or more memories for storing instructions and/or data.

Generally, a computer may also include, or be operatively coupled to communicate with, one or more mass storage devices for storing data files. Such devices include magnetic disks, such as internal hard disks and/or removable disks, magneto-optical disks, and/or optical disks. Storage devices suitable for tangibly embodying computer program instructions and/or data may include all forms of non-volatile memory, including for example semiconductor memory devices, such as EPROM, EEPROM, and flash memory devices, magnetic disks such as internal hard disks and removable disks, magneto-optical disks, and CD-ROM and DVD-ROM disks. The processor and the memory may be supplemented by, or incorporated in, one or more ASICs (application-specific integrated circuits).

To provide for interaction with a user, the features of the present embodiments may be implemented on a computer having a display device, such as an LCD (liquid crystal display) monitor, for displaying information to the user. The computer may further include a keyboard, a pointing device, such as a mouse or a trackball, and/or a touchscreen by which the user may provide input to the computer.

The features of the present embodiments may be implemented in a computer system that includes a back-end component, such as a data server, and/or that includes a middleware component, such as an application server or an Internet server, and/or that includes a front-end component, such as a client computer having a graphical user interface (GUI) and/or an Internet browser, or any combination of these. The components of the system may be connected by any form or medium of digital data communication, such as a communication network. Examples of communication networks may include, for example, a LAN (local area network), a WAN (wide area network), and/or the computers and networks forming the Internet.

The computer system may include clients and servers. A client and server may be remote from each other and interact through a network, such as those described herein. The relationship of client and server may arise by virtue of computer programs running on the respective computers and having a client-server relationship to each other.

The functions of the various computer elements, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

Fig. 2 demonstrates aspects of the motor controller 204. For instance, the motor controller 204 may include a motor driver 211 and a controller workstation 213. The motor driver 211 may be hard-wired to the motor 217. The motor driver 211 may be configured to provide 3-phase currents and to process information that is transmitted from sensors 222, such as analogic sensor signals that may include a rotor position and load cell torque. The controller workstation 213 may be connected to the model of the vehicle, such as the model of the virtual vehicle within the virtual environment. The controller workstation 213 may be configured to provide torque commands as feedback cues to the user. The sensors 222 may be configured to measure various aspects and attributes of the operation and characteristics of the steering system 101. The sensors 222 may be located within and/or distributed across the steering system 101. The controller 204 may include various modules 225 that are configured to process information, determine characteristics, host a virtual representation of the vehicle running in real-time, and/or produce control commands based on attributes of the steering system 101, such as those measured by the sensors 222, attributes of the virtual vehicle and/or virtual environment, or other attributes related to the operation of the steering system 101. For instance, the modules may include a steering wheel state estimator module 228 and/or a feedforward control module 231.

The steering wheel state estimator module 228 may be configured to improve the accuracy of an estimation of the current state of the steering wheel 104. For example, the steering wheel 104 states may be estimated from the observable magnitudes at the lower part of the steering column 109, such as the HWLS states and the actuator load cell torque output. The estimator 228 may use an internal model of the physical plant, based on the identified parameters, to make a prediction of the true steering wheel 104 states which are not directly observable. The model may include correction for kinematic error - associated with the variable ratio double universal joint system - as well as dynamic compensation due to system stiffness, damping, friction and inertia. The predicted steering wheel 104 states may then be used to feed the virtual steering model.

The feedforward torque compensator module 231 may be configured to compensate for undesired feedback distortion, such as those caused by plant dynamics and/or transfer path dynamics in the steering system 101 when providing torque from the actuator 112 to the steering wheel 104. The vehicle model may provide a target steering wheel 104 torque as an output to the HWLS. Since the actuator 112 may not be directly connected to the steering wheel 104 itself, the signal is subject to a feedforward control including the transfer path dynamics. The feedforward control is based on the identified plant model internally, but in this case it's linearized and modified to allow for transfer function inversion.

An aspect of the present disclosure is directed toward a method for implementing a feedforward control model in order to compensate for undesired feedback distortion, such as those caused by plant dynamics and/or transfer path dynamics in a steering system 101. The plant dynamics for the steering system 101 may first be determined, such as for the previously discussed steering system 101. Namely, determining the plant dynamics may include at least one of the following: determining the characteristic angles for the universal joints 129a, 129b, determining the stiffness of the torsion bar 120, or determining the transfer function from the command torque to the measured torque at the motor output shaft, such as by a torque cell. Next, at least one of the follow group may be applied to the control signal of the actuator: a steering wheel state estimator configured to improve the steering wheel state signal; or a torque command feedforward compensator that is configured to correct the mismatch between the measured and actual torque.

### Plant Dynamics

An aspect of the disclosure is directed toward determining the plant dynamics of the steering system 101. Determining a plant dynamic attribute may comprise identifying mechanical attributes of components or assemblies of the steering system 101 and using the mechanical attributes to make a mathematical model of the physical system. The mechanical attributes may include any combination of torsional stiffness, friction characteristics, or moments of inertia. The plant dynamics may also include component inertia and stiffness, frictions, variable kinematic ratios, and communication delays. Plant dynamics may further include any such characteristics that are relevant to the overall dynamics of the steering system 101. The plant dynamics may be determined via measurements, such as via sensors configured to measure the described attributes. The sensors may measure an initial state of the plant dynamics. Alternatively, or additionally, the sensors may measure the plant dynamics on an ongoing basis.

In an example, the plant dynamics may be determined via tests that are conducted on the steering system 101. The tests may be designed to determine specific attributes of the plant dynamics. For instance, in a test, a steering robot may be fitted to the steering wheel 104 in order to obtain accurate measurements of the angle and torque of the steering wheel 104.

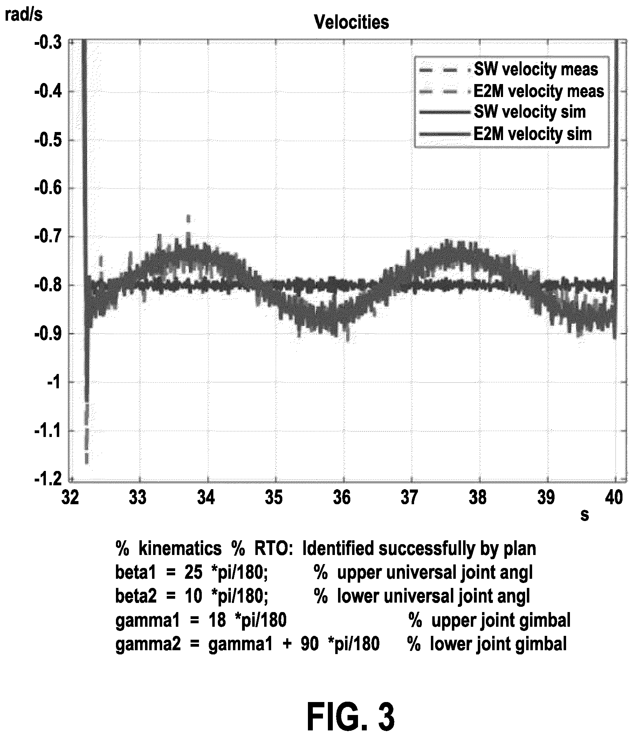

In an example, in order to find the characteristic angles for the universal joints 129a, 129b, which may determine the angle and velocity dependency between the lower column 125b and the upper column 125a, the angles may be directly measured, especially if the dimensions of the mechanical set up of the steering system 101 are known, such as, for example, from CAD data that contains the layout of the steering system 101. Alternatively, or additionally, a constant velocity test driven by the steering robot may be performed, as demonstrated by FIG. 3. The test may be performed at a low speed setting. This test may be appropriate when the angles of the universal joints 129a, 129b may have been adjusted and/or when access to the steering system 101 is too restrictive to allow manual measurement of the angles.

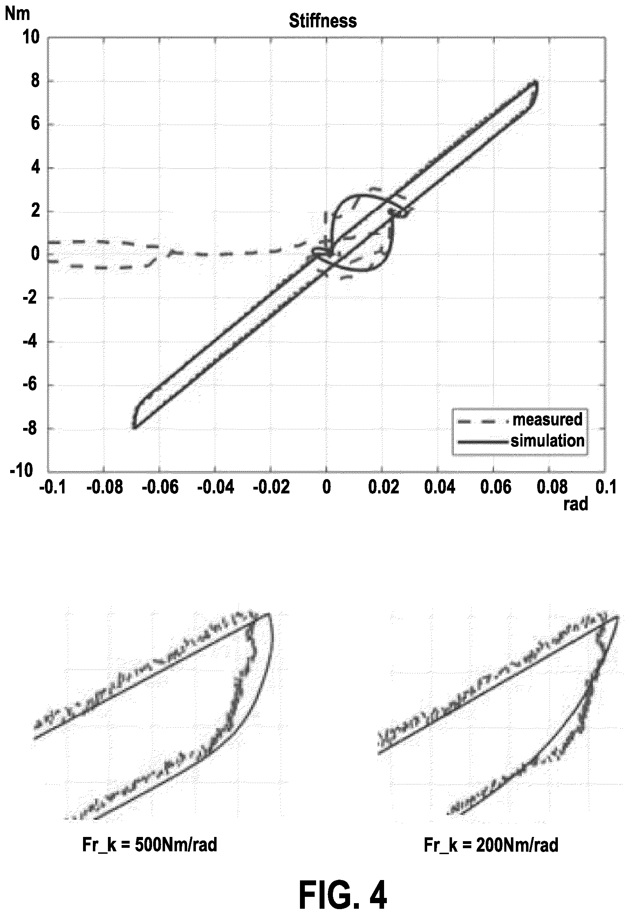

In another example, a static load test may be performed in order to measure the stiffness of the torsion bar 120, as demonstrated by FIG. 4. The steering robot on the steering wheel 104 may be set to control the rotation angle of the steering wheel 104, such as to keep the steering wheel angle at a substantially static position. For instance, the steering robot may maintain the steering wheel 104 at a center position such that if the steering wheel 104 were in the act of controlling a vehicle, it would maintain the vehicle on a forward path. While the steering robot is thus engaged, the actuator may apply a torque ramp, such as between a negative torque and a positive torque. For instance, in the example shown in fig. 4, a torque ramp of approximately -8 Newton-meters to approximately 8 Newton-meters may be used, although it is contemplated that other torque values may be used. The resulting measured motor angle allows fitting a stiffness characteristic, as well as a static friction value.

In yet another example, the transfer function from the command torque to the measured torque at the output shaft of the actuator 112 by the torque cell may be assessed. For example, a step response may be performed. This may be performed while the movement of the steering wheel 104 is unrestricted such that the steering wheel 104 is free to move and/or rotate. The test may show a delay between the command and the torque response. The test may also reveal complex dynamics that may not be rooted exclusively in plant response, such as dynamics that are due to motor control dynamics.

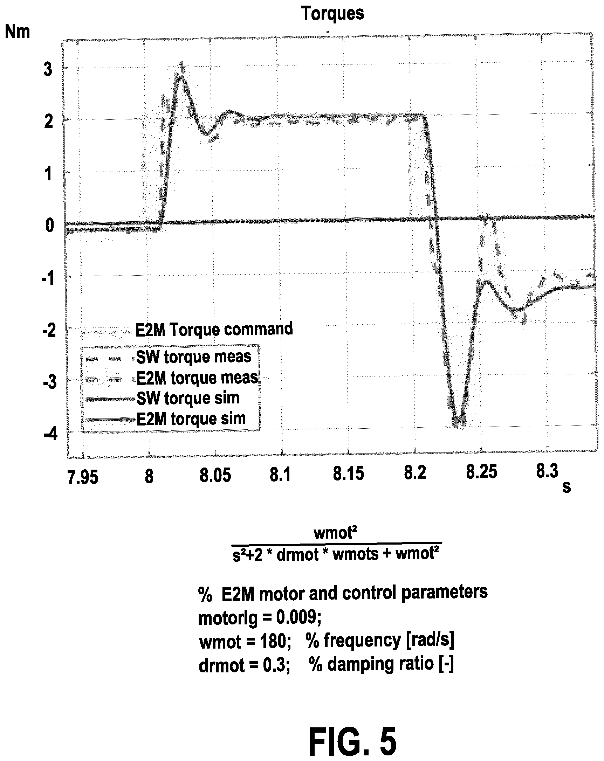

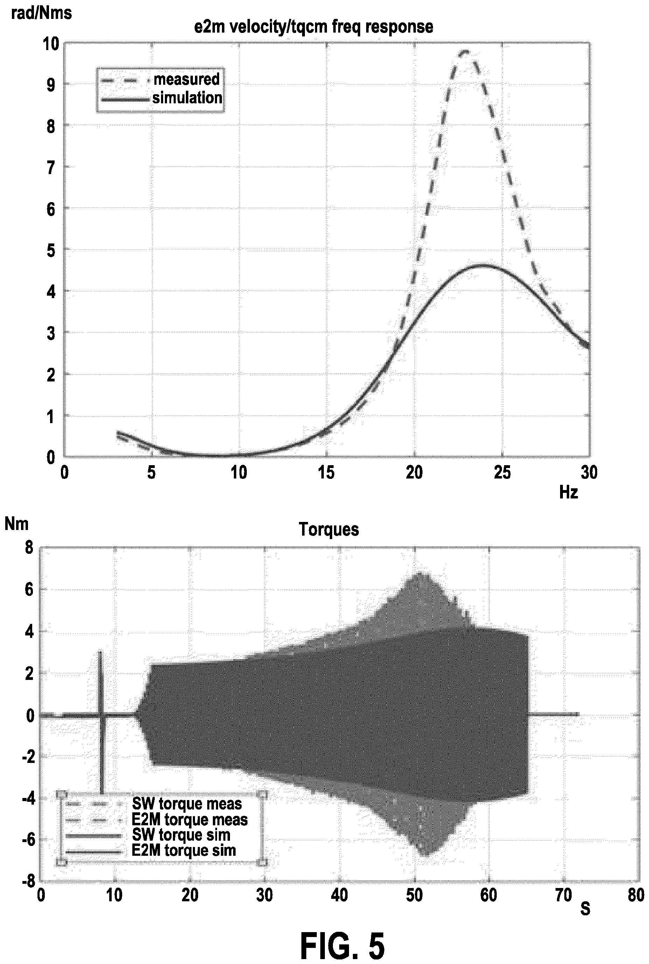

For instance, FIG. 5 demonstrates that the identified mechanical properties show that the steering system 101 introduces complex dynamics in a frequency range of interest, with an underdamped eigenvalue at around 23 Hz. One of the effects is that the motor state, as read by the sensors 222, are not a good representation of the steering wheel state at frequencies as low as 5 Hz and above. In order to have a stable steering control, a better reading of the true steering wheel state may be useful.

### Steering Wheel State Estimator

An aspect of the present disclosure is directed toward applying a steering wheel state estimator configured to improve the steering wheel state signal. In an example, an angle sensor may be added to the steering wheel 104 in order to obtain an improved wheel state signal. In another example, the angle of the lower column 125b and a torque reading may be used to estimate the steering wheel state without additional sensors.

In an example, an estimator module 231 of the controller 204 is configured to process the measured and/or corrected signals from the actuator 112 (the motor angle, velocity and acceleration, and the motor torque) in order to determine the steering wheel state upstream of the actuator 112. Linearalized elements of a known mechanical plant, such as the plant dynamics determined by the process previously described, may be used by the estimator module 231. In an aspect of the disclosure, the non-linear elements, such as non-linear universal joint kinematics, may be treated separately. In an aspect of the disclosure, other non-linear elements, such as frictions, may be replaced by linear equivalents, such as to allow for system inversion.

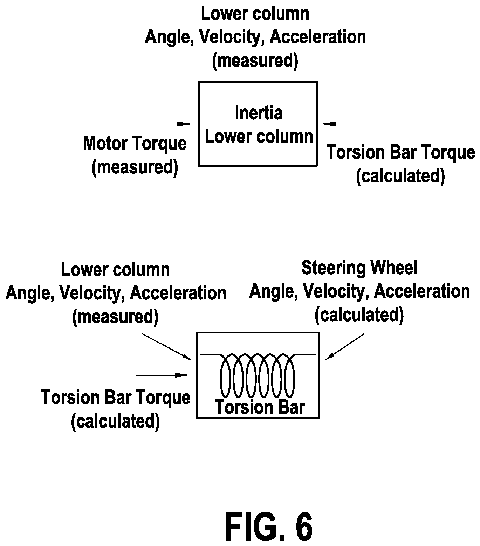

The measured lower column states may be used to determine inertia and viscous torques. These attributes may be used to determine, along with the measured torque of the lower column 125b, the torsion bar torque. The torsion bar torque can be used in combination with the lower column states to estimate the steering wheel angle and derivatives. This is demonstrated by FIG. 6.

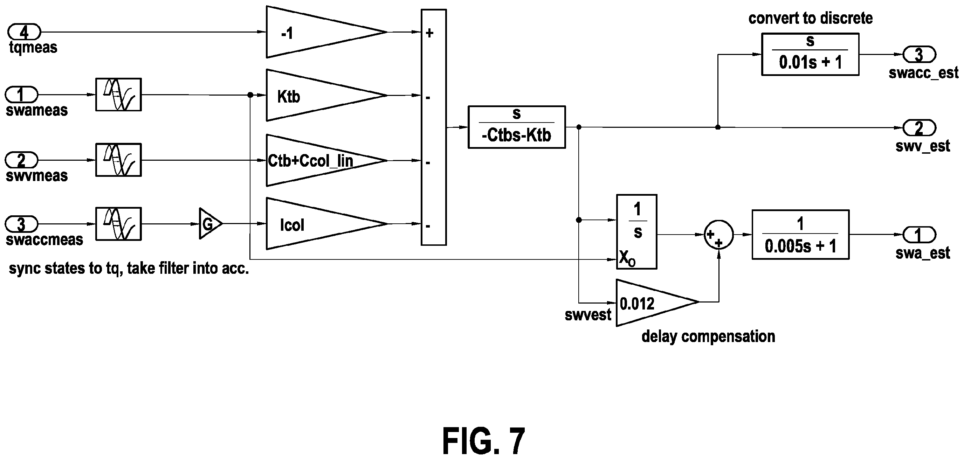

FIG. 7 illustrates a schematic example of an implementation of the method. The shaded blocks are added to improve the real-time loop performance due to various factors. For instance, the measured torque signal may be received with some small delay with respect to the measured states. It may be desirable for all input signals to be synchronized in time. Thus, the state signals may be slightly delayed to match the torque. The resulting estimated steering wheel angle may present lag with respect to the actual angle. This may be partially corrected by using the estimated speed. The corrected estimated angle and the calculated acceleration may be low-pass filtered to avoid noise amplification. The inertia effect of the lower column may be small such that the noise in the signal may outweigh its magnitude, which may lead to instabilities. For this reason, these effects may be disregarded.

### Torque Feedforward Controller

A similar situation to the measured and real system state mismatch happens with the steering wheel torque. The virtual model may calculate a torque applied at the virtual steering wheel, but the hardware actuator 116 is placed at the bottom of the steering column 109. This torque is therefore modified by the plant dynamics when it reaches the driver hands.

An aspect of the disclosure is directed toward a torque command feedforward compensator ("compensator") that is configured to correct the mismatch between the measured and actual torque. The compensator may include two parts: a column dynamics compensator and an electromechanical motor dynamics compensator. The column dynamics compensator may use the linear plant representation to compensate for the steering column dynamic, such as in a similar way as with the state estimator. By taking the transfer function Torsion Bar torque and/or command torque and inverting it, a more accurate representation of the command torque can be calculated, which may be used to generate the intended steering wheel torque. In a case where the inverted transfer function is not physically realizable, as it may have more zeroes than poles, a Butterworth low-pass transfer function may be added to both increase the number of poles and reduce the computed noise level.

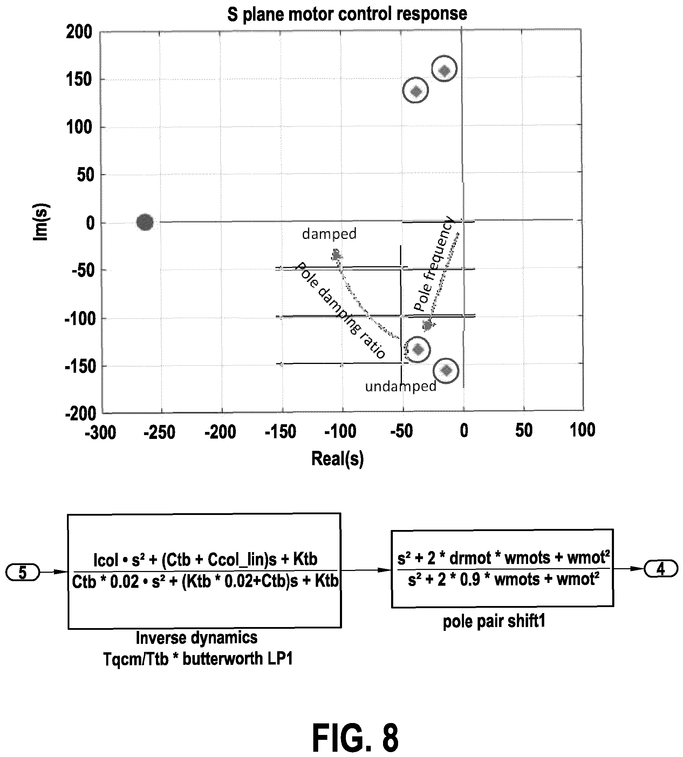

As seen in FIG. 8, the actuator dynamics may introduce additional distortion to the command torque when measured at the motor shaft. The motor dynamics compensator may increase the damping of the oscillations introduced by these dynamics, such as by shifting the pole location in the complex plane.

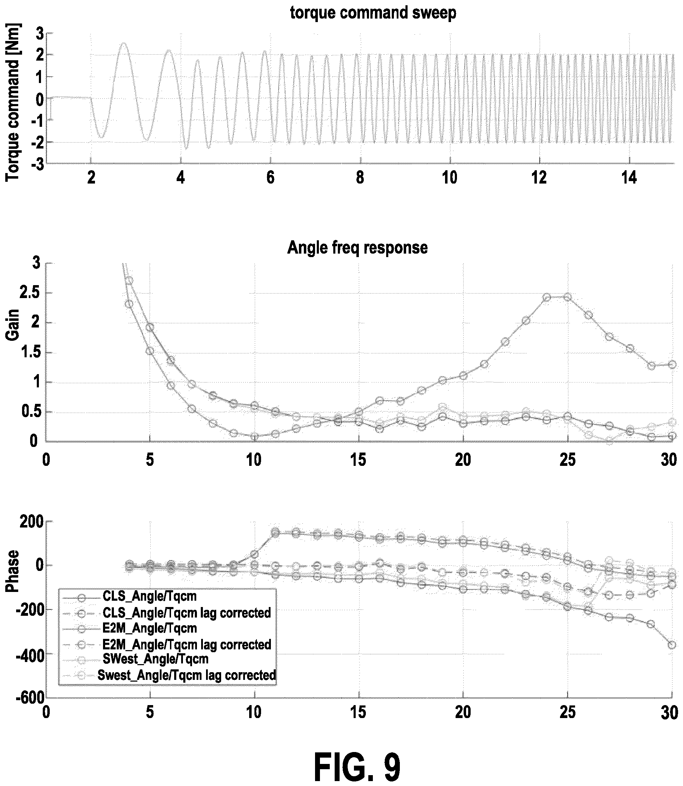

FIG. 9 demonstrates the frequency responses of different measured and estimated angles to motor torque command. The input torque may be a discrete frequency torque sweep from 1 to 30 Hz with increments of 1 Hz. Each frequency point may be excited for 2 seconds and evaluated only in the last second in order to discard transients and ensure the system is in steady state.

Shown in the chart are the measured steering wheel angle using the steering robot, the measured motor angle using the built-in motor sensor, the estimated steering wheel angle using only the motor sensors, signals as received at the vehicle model end, and signals time-corrected to compensate estimated loop latency. It can be seen that the estimator is able to closely match the actual steering angle up to 25 Hz. On the contrary, the motor angle alone may be a rather poor indicator of the steering state at most of the bandwidth. It can also be seen that the communication delays have a negative impact on the phase margin, reducing the frequency at which the system can become unstable.

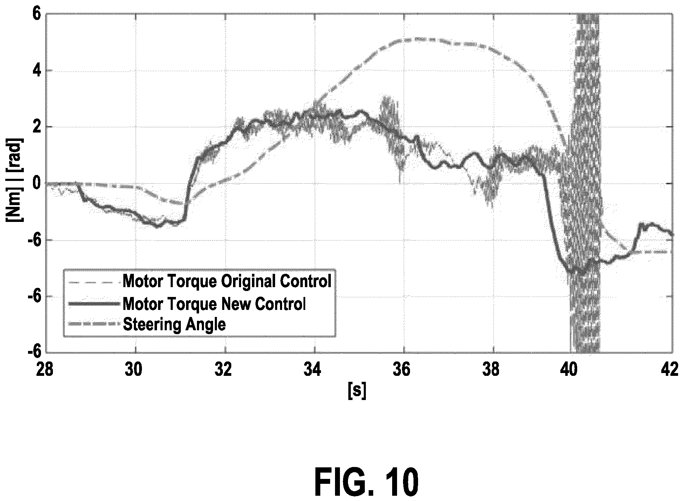

FIG. 10 shows a comparison of the steering torque profile for a free driving maneuver in the initial delivered condition and when using the developed control strategy of the present disclosure. It can be seen the new control is able to remove the high frequency vibrations and instability.

Through the preceding control regimens, the mismatch between the measured and target states may be overcome, as well as the feedback distortion. The control signal for the actuator may be augmented using the produced data incorporating the determined plant dynamics. Thus, the actuator may produce feedback to the steering wheel based on the system identification in order to overcome system instabilities and improve feedback fidelity within the steering system.

While this specification contains many specific implementation details, these should not be construed as limitations on the scope of what can be claimed, but rather as descriptions of features that can be specific to particular implementations. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

## Claims

1. A method for compensating for dynamic mismatches or feedback distortions introduced by mechanical components in a steering system (101), the method comprising:
- determining a plant dynamic attribute for the steering system (101), and
- applying, based on the plant dynamic attribute, to a control signal by a handwheel loading system at least one out of the following group:
- a steering wheel state estimator configured to improve a steering wheel state (104) signal; or
- a torque command feedforward compensator that is configured to correct a mismatch between a measured torque and an actual torque.

2. The method according to claim 1, wherein the steering system (101) comprises a steering wheel (104), a steering column (109), and a handwheel loading system that is configured to account for a mismatch between the virtual and the actual interface point at the virtual model and the actuator hardware when providing steering cues to a user via the steering wheel (104) through the steering column (109).

3. The method according to claim 2, wherein the handwheel loading system comprises an actuator (112) configured to provide a torque response to the steering wheel (104), and a motor controller (116) configured to control the actuator (112).

4. The method according to any one of claims 1 to 3, wherein determining a plant dynamic attribute comprises identifying mechanical attributes of components or assemblies and using the mechanical attributes to make a mathematical model of the physical system, wherein the mechanical attributes comprises at least one of: torsional stiffness, friction characteristics, or moments of inertia.

5. The method according to any one of claims 1 to 4, wherein the steering wheel state estimator is configured to determine the steering wheel (104) state using an angle sensor in the steering wheel (104).

6. The method according to any one of claims 1 to 4, wherein the steering wheel state estimator is configured to determine the steering wheel (104) state using a lower column angle and torque readings to estimate the steering wheel (104) states.

7. The method according to any one of claims 1 to 6, wherein the steering wheel state estimator is configured to use the measured and corrected signals from the motor hardware and determine the required steering wheel (104) states upstream given a known mechanical plant that can be linearized.

8. The method according to any one of claims 1 to 7, wherein the torque command feedforward compensator is comprised of a column dynamics compensator configured to use the linear plant representation to compensate for the steering column (109) dynamic and an electromechanical motor dynamics compensator that is configured to increase the damping of the oscillations introduced by the motor dynamics to the command torque.

9. A steering system (101) that includes high order dynamics introduced by mechanical components comprising:
a steering wheel (104),
a steering column (109),
and a handwheel loading system that is configured to account for a mismatch between the virtual and the actual interface point at a virtual model and an actuator (112) when providing steering cues to a user via the steering wheel (104) through the steering column (109)

10. The steering system (101) according to claim 9, wherein the steering column (109) comprises a plurality of column elements (125a, 125b), wherein each column element (125a, 125b) is connected to an adjacent column element (125a, 125b) via a universal joint (129a, 129b).

11. The system (101) according to any one of claims 9 or 10, wherein the handwheel loading system comprises an actuator (112) configured to provide a torque response to the steering wheel (104), and a motor controller (116) configured to control the actuator (112).

12. The steering system (101) according to any one of claims 9 to 11, wherein the motor controller (116) includes at least one out of the following group:
- a steering wheel state estimator module (228) configured to improve a steering wheel state (104) signal; or
- a torque command feedforward compensator module (231) that is configured to correct a mismatch between a measured torque and an actual torque.

13. The steering system (101) according to any one of claims 9 to 12, wherein the steering system (101) is part of a closed-loop driving simulator.

14. The steering system (101) according to any one of claims 9 to 12, wherein the steering system (101) is part of a vehicle.

15. A non-transitory computer-readable medium storing a program which, when executed by a microprocessor or computer system, causes the microprocessor or computer system to perform the method of Claim 1.
